# FASCICULE DE BREVET EUROPEEN

(11) **EP 1 478 538 B1**
(45) Date de publication et mention de la délivrance du brevet: **12.09.2007**
(21) Numéro de dépôt: 02706879.0
(22) Date de dépôt: 20.02.2002
(51) Int. Cl.: B60J 10/02, B60J 1/00

(54) **VITRAGE AVEC UN ELEMENT RIGIDE INCORPORE DANS UNE PIECE EN PLASTIQUE SURMOULEE**
SCHEIBE MIT EINEM STARREN ELEMENT IN EINEM UMSPRITZEN KUNSTSTOFFTEIL EINGESETZT
PANE WITH A RIGID ELEMENT INCORPORATED IN AN OVERMOULDED PLASTIC PART

(43) Date de publication de la demande: 24.11.2004
(73) Titulaire: SAINT-GOBAIN GLASS FRANCE, 92400 Courbevoie (FR)
(72) Inventeur: HUCHET, Gérard, F-02600 Retheuil (FR)
(74) Mandataire: Jamet, Vincent
(86) Numéro de dépôt international: PCT/FR2002/000634
(87) Numéro de publication internationale: WO 2003/070500

(56) Documents cités:
- EP-A- 0 524 323
- EP-A- 0 611 854
- EP-A- 0 771 684
- EP-A- 1 026 022
- DE-A- 19 614 321
- DE-A- 19 923 725
- US-A- 5 185 979

## Description

L'invention se rapporte au domaine du vitrage et concerne un vitrage selon le préambule de la revendication 1 notamment pour le bâtiment ou pour véhicules automobiles ou de loisir, pourvu d'une pièce en matière plastique surmoulée sur l'élément vitré et qui incorpore un élément rigide. Un vitrage de ce type est connu du document DE 19923725C.

Un exemple particulier de vitrage de ce type dans le domaine des véhicules automobiles terrestres est donné par les toits vitrés, ouvrants ou fixes, occupant jusqu'à la quasi-totalité de la surface du pavillon. Ces vitrages comprennent un élément vitré, notamment en verre trempé, en verre feuilleté ou en plastique transparent, muni d'un encadrement en matière plastique surmoulé sur l'élément vitré, qui peut intégrer des éléments rigides de fixation au mécanisme d'entraînement du toit ouvrant. Afin de rigidifier l'élément vitré qui est soumis, lors de la circulation du véhicule, à des déformations dues à la pression liée à la vitesse de circulation, il est courant de doter le cadre surmoulé d'éléments de renfort sous la forme de barres métalliques, généralement en acier.

Dans une technique couramment mise en oeuvre, les barres de renforcement sont intégrées dans le cadre en matière plastique directement au cours de l'opération de surmoulage, en plaçant une ou des barres en insert avec l'élément vitré dans le moule de fabrication, puis en injectant la matière plastique de manière à incorporer le ou les inserts.

Avec les températures d'injection des matières thermoplastiques, ou la chaleur dégagée par la polymérisation d'un polyuréthane bicomposant selon un procédé RIM (Reaction Injection Moulding), qui sont des matériaux et procédés couramment employés à cet effet, cette technique présente l'inconvénient d'entraîner des déformations des éléments métalliques de renforcement d'abord à chaud par dilatation dans le moule, puis en sortie du moule par rétractation à froid, lesquelles imposent à l'élément vitré des contraintes et des déformations qui peuvent être inadmissibles pour le montage dans la carrosserie d'un point de vue mécanique et/ou esthétique.

Pour compenser ces déformations, on peut faire suivre la fabrication d'une étape de reconformation du vitrage par compression, mais cela entraîne une déformation du composite moulé, laquelle peut nuire à la liaison aux différentes interfaces et donc à l'intégrité du vitrage.

Un problème similaire de dilatation peut également se produire lorsque le véhicule est exposé à la chaleur de façon prolongée, notamment quand il stationne longuement en plein soleil. L'alternance de cycles échauffement/refroidissement tend alors progressivement à modifier inévitablement le galbe du vitrage, ce qui nuit à la ligne du véhicule.

La présente invention a pour but d'obvier aux inconvénients précités.

A cet égard l'invention a pour objet un vitrage selon la revendication 1.

En sélectionnant pour les éléments rigides selon l'invention des matériaux ayant un coefficient de dilatation linéaire proche de celui de l'élément vitré, on évite l'apparition de contraintes de dilatation différentielle dans l'ensemble constitué par l'élément vitré, la matière plastique et le(s) élément(s) rigide(s). Par conséquent, la conception et la fabrication du vitrage sont simplifiées, puisqu'il n'est plus nécessaire de pratiquer d'étape supplémentaire de conformation du vitrage.

En outre, la fabrication est globalement plus fiable, car les dimensions finales du vitrage sont plus proches de la médiane de l'intervalle de tolérances autorisé, qu'on ne le serait avec un élément métallique.

Dans le cadre de la présente invention, on désigne par élément vitré non seulement des éléments verriers constitués d'une ou plusieurs feuilles de verre liées entre elles le cas échéant par des feuilles intercalaires adhésives, mais aussi des éléments transparents ou translucides en polycarbonate.

Le ou les éléments rigides présentent un coefficient de dilatation thermique linéaire différent d'au plus 10⁻⁶ °C⁻¹ de celui de l'élément vitré.

Conformément à une réalisation particulière de l'invention, ce coefficient de dilatation thermique linéaire est de l'ordre de 8 à 10 x 10⁻⁶ °C⁻¹.

Pour des raisons notamment de coût on réalise les éléments rigides à base de verre, notamment sous la forme de composites de matière plastique et de verre, par exemple de fibre de verre. L'élément rigide présente une tenue mécanique avantageuse quand le composite renferme au moins 60% en volume de verre, de préférence au moins 75%, en particulier au moins 80%, notamment de l'ordre de 90% de verre en volume. Les valeurs les plus élevées qui viennent d'être citées sont préconisées lorsque l'élément vitré est en verre, tandis que lorsqu'il est en polycarbonate, des proportions volumiques d'au moins 60%, de préférence au moins 75% de verre sont plus appropriées.

Le verre est un matériau d'emploi pratique car il n'introduit pas de problème d'affinité vis-à-vis des matières organiques utilisables pour constituer la pièce surmoulée qui sont déjà sélectionnées pour leur compatibilité avec le verre. Par exemple, l'intégration d'un tel élément rigide dans une pièce surmoulée en polyuréthanne ne pose aucun problème d'intégrité du composite.

Grâce à la qualité de la liaison entre l'élément rigide et la matière plastique surmoulée, on obtient pour le vitrage final des performances mécaniques comparables à celles d'un vitrage renforcé par un élément métallique, et ce même si l'élément rigide en verre possède des performances mécaniques intrinsèques inférieures à un élément métallique.

Un élément rigide selon l'invention peut ainsi être avantageusement caractérisé par une résistance en flexion, variable en fonction de la géométrie de l'élément, suffisamment élevée.

Un élément à base de verre présente en outre l'avantage d'avoir un poids réduit de l'ordre de 30 à 50% par rapport à un élément rigide métallique. Ceci peut être avantageux lorsque la matière plastique surmoulée est plus coûteuse que le matériau constitutif de l'élément rigide, une augmentation du volume de l'élément rigide entraînant une économie correspondante de matière à surmouler.

Enfin, la fabrication du vitrage surmoulé est facilitée avec un élément rigide à base de verre pour lequel on peut autoriser qu'une partie de cet élément vienne au contact de l'élément verrier dans le moule, alors qu'avec un élément rigide métallique, il faut prendre des précautions particulières pour éviter tout contact verre-métal. En effet, le contact d'un élément rigide à base de verre avec la surface de l'élément vitré en verre, ou avec le vernis qui la recouvre le cas échéant, est beaucoup moins susceptible d'endommager ceux-ci que le contact d'un élément rigide métallique.

Selon une caractéristique avantageuse, ledit élément rigide est un composite de matière plastique et de fibre de verre. Un tel composite peut être obtenu par toute technique connue en soi de fabrication de composites, par exemple par thermoformage (notamment thermocompression) de préimprégnés.

On préfère tout particulièrement réaliser les éléments à partir d'un produit constitué de fils co-mêlés de verre et de matière organique thermoplastique, disponible sous la marque Twintex^{®} auprès de Vetrotex Saint-Gobain. La structure et la fabrication de ces fils comêlés sont décrits notamment dans les documents FR 2 516 441, FR 2 638 467, EP 0 599 695.

La fabrication des éléments rigides selon l'invention peut faire appel notamment à des fils comêlés libres ou à des semi-produits sous forme de bandes ou de mats constitués de fils comêlés tissés ou non, que l'on peut éventuellement associer à une matière organique thermoplastique ou thermodurcissable. Le tissage des fils et/ou leur orientation dans une ou des directions privilégiées peuvent être sélectionnés de manière bien connue en vue de l'obtention de propriétés mécaniques désirées dans des directions déterminées.

A titre de matières organiques utilisables pour constituer un élément rigide composite selon l'invention, on peut citer en particulier des polyoléfines telles que le polyéthylène ou le polypropylène, ainsi que des polyesters tels que le polytéréphtalate d'éthylène ou de butylène.

Ces mêmes matières plastiques sont susceptibles d'entrer dans la composition de fils comêlés. Lorsqu'on combine un produit à base de fils comêlés avec une matière plastique, on utilise avantageusement une matière de la même famille que celle présente dans lesdits fils, et de préférence exactement la même matière. Ces matières plastiques sont sélectionnées le cas échéant pour leur compatibilité avec l'élément vitré lorsqu'il est lui-même en polycarbonate pour ce faire elles peuvent consister en la même matière plastique ou en un matériau inerte vis-à-vis de celui de l'élément vitré (ce qui est en général le cas du polypropylène par exemple).

Compte tenu du gain de poids permis par l'utilisation d'un élément rigide à base de verre, cet élément peut être fabriqué avec au moins une dimension, disons l'épaisseur, suffisante pour autoriser tous types de fixation d'éléments divers sur le vitrage, notamment au moyen d'un simple trou non taraudé pouvant recevoir une vis ou un moyen de liaison par force, encliquetage, ou autre... L'élément rigide, inséré dans une matière plastique de surmoulage, peut être réalisé dans un matériau du type Twintex® selon toute forme (patte,...) adaptée à la fixation ou autre fonction.

Ainsi, l'invention s'applique entre autres à l'intégration à un vitrage fixe d'un support de fixation, d'un support de mécanisme de fermeture, ainsi qu'à l'intégration à un vitrage mobile des moyens de guidages ou supports de moyens de guidage du vitrage. L'invention permet aussi l'intégration d'un support de conducteurs électrique ou de capteurs électriques, sans crainte de court-circuit, toujours possible avec un élément support métallique.

L'invention s'applique également à l'adjonction d'éléments de renfort à tous types de vitrages, notamment ouvrants tels que des toits vitrés ou des lunettes arrière ouvrantes en verre trempé ou feuilleté pour des véhicules automobiles, ou non ouvrants tels que des pavillons de toit vitrés collés sur la carrosserie d'un véhicule dont l'envergure demande généralement un renforcement notamment dans la partie centrale. Le ou les éléments rigides constituent alors une poutre longitudinale ou un arceau transversal de renforcement, en association avec une matière plastique surmoulée dans laquelle ils sont incorporés.

Selon encore une autre variante de l'invention, celle-ci s'applique notamment à des toits vitrés ou des lunettes arrière ouvrantes en verre, feuilleté, ou en verre non durci, ou encore en plastique, pour des véhicules automobiles ou des applications relevant du bâtiment.

Bien entendu, cette variante peut être aussi appliquée à des substrats en verre trempé, durci.

Ces différents substrats verriers ou en polycarbonate sont pourvus sur l'une de leur face ou sont associés, à au moins un dispositif électrochimique, notamment un système électrocommandable à propriétés optiques et/ou énergétiques variables, ce dispositif électrochimique, communément appelés dispositif électrochrome, étant du type de ceux décrits dans WO 00/71777 ou dans WO 00/57243 par exemple appartenant au même demandeur.

L'utilisation de tel vitrage ou substrat est avantageuse pour faire partie de vitrages électrochromes, pour bâtiment notamment des vitrages extérieurs ou de cloison interne ou de porte vitrée ou de toitures ou pour des moyens de locomotion du type train, avion (hublot), voiture (toit, lunette..).

L'invention peut aussi s'appliquer à l'intégration d'un élément de renfort dans un accessoire surmoulé, notamment un béquet attaché à la lunette arrière d'un véhicule.

Les vitrages équipés selon l'invention peuvent aussi bien être des vitrages de bâtiment, des vitrages pour véhicules terrestres automobiles ou tractés tels que des caravanes, ainsi que pour différents véhicules de loisir, notamment bateaux...

L'adjonction des éléments rigides selon l'invention peut avantageusement être réalisée au cours de l'opération de moulage de la pièce surmoulée.

D'autres détails et caractéristiques de l'invention apparaîtront de la description détaillée qui va suivre d'un mode exemplaire de réalisation, faite en regard des dessins annexés sur lesquels :
- la figure 1 représente une vue en perspective d'un vitrage selon l'invention ;
- les figures 2 et 3 représentent des vues en coupe du vitrage de la figure 1 respectivement suivant les axes II-II et III-III.

On précise que par un souci de clarté les différents éléments des objets représentés ne sont pas nécessairement reproduits à l'échelle.

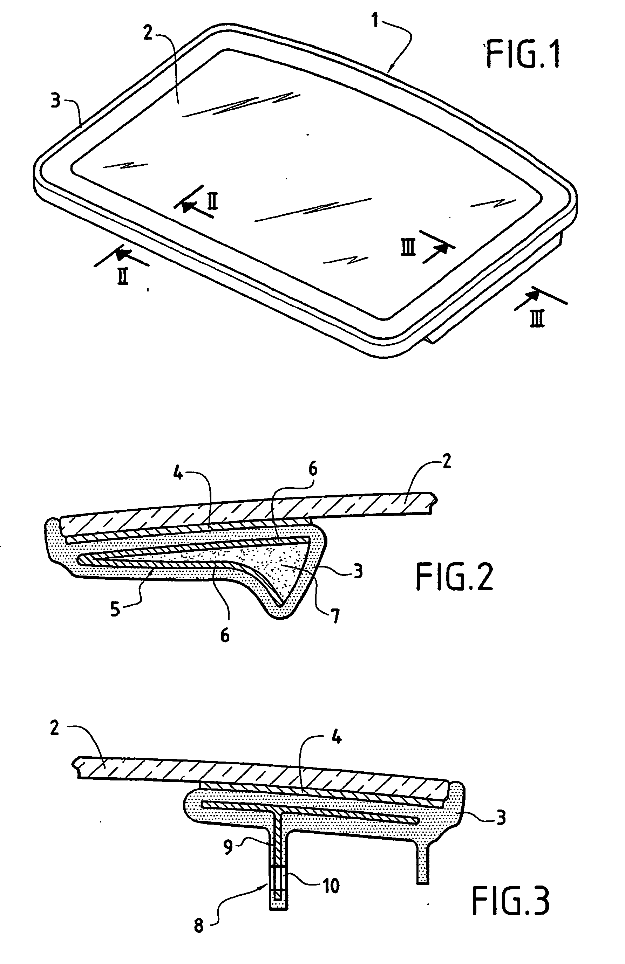

Le vitrage de la figure 1 est un toit ouvrant vitré 1, qui comprend un élément verrier 2 , notamment en verre trempé, pourvu d'un cadre surmoulé 3 en toute matière plastique adaptée, notamment en polyuréthanne.

Le cadre 3 est déposé sur une couche 4 d'émail opaque à la périphérie de l'élément verrier, et dont la fonction est de cacher à la vue depuis l'extérieur les équipements liés au vitrage.

Le cadre 3 fait ici tout le tour de l'élément verrier 2, mais il s'entend qu'il peut, suivant les besoins, ne s'étendre que sur une partie de la périphérie de ce dernier.

Le cadre 3 est en contact avec le chant de l'élément verrier et la face de l'élément verrier qui sera tournée vers l'intérieur du véhicule. Cela permet une disposition du toit ouvrant 1 en affleurement avec la carrosserie environnante.

En variante, le cadre 3 pourrait n'être en contact qu'avec la face intérieure de l'élément verrier 2 ou bien être placé à cheval sur le bord de l'élément verrier 2 en contact avec les deux faces intérieure et extérieure de l'élément verrier 2.

Sur la figure 2, on voit que le cadre 3 est renforcé le long d'un grand côté par un élément de renfort 5 qui est incorporé dans la matière 3 du cadre.

L'élément de renfort est un composite de fibre de verre et de matière plastique. Il se compose d'une part de mats 6 de fils Twintex® qui sont des fils comêlés de verre et de matière thermoplastique (dans un rapport volumique au moins égal à 60/40, de préférence à 75/25 et au plus égal à 90/10), tissés et/ou non tissés, d'une épaisseur de 3 à 20 mm, et d'autre part d'une matière thermoplastique 7 identique ou différente de celle présente dans les fils comêlés moulée au contact des mats 6. Les mats 6 peuvent être conformés par thermoformage préalablement à l'injection de la matière 7 dans le moule.

Les proportions des mats 6 et de matière plastique 7 sont telles que la teneur volumique en fibre de verre de l'élément de renfort composite 5 est comprise entre 60 et 90%. L'ajout de matière thermoplastique 7 est facultatif ; la quantité ajoutée est ajustée le cas échéant en fonction des volumes et sections que l'on souhaite obtenir.

On peut régler le coefficient de dilatation thermique linéaire de l'élément rigide selon l'invention et obtenir des propriétés mécaniques équivalentes à celles d'un élément rigide métallique, plus lourd de 30 à 50%, pour des géométries variées de l'élément rigide, en en adaptant la forme, en ajustant la proportion de fils comêlés et parmi ceux-ci la proportion de fibres de verre, ou en empilant plusieurs nappes de Twintex®...

Sur la figure 3, on voit qu'un autre élément rigide 8 est intégré au cadre 3 le long d'un petit côté. Cet élément 8 sert d'une part à renforcer le vitrage et d'autre part à la fixation d'un mécanisme d'entraînement du toit, non représenté.

L'élément 8 est composé, de manière analogue à l'élément 5, de mats 9 de fils comêlés de verre et de matière thermoplastique intégrés dans une matière thermoplastique ou thermodurcissable, les matières étant identiques ou différentes de celles mentionnées pour l'élément 5.

Un trou 10 non taraudé est ménagé dans une aile de l'élément 8 pour recevoir une partie de fixation du mécanisme d'entraînement du toit 1.

Les éléments rigides 5,8 peuvent être intégrés au cadre 3 à l'occasion du surmoulage du cadre 3 sur l'élément verrier 2, en les plaçant en inserts à l'intérieur du moule, puis en injectant la matière plastique du cadre 3.

Au cours de cette opération de moulage, les éléments rigides insérés dans le moule subissent à la température de moulage une dilatation thermique du même ordre que l'élément verrier 2, de sorte qu'il n'apparaît pas au refroidissement de contrainte de dilatation différentielle.

L'invention, qui vient d'être décrite dans le cas particulier d'un vitrage mobile pour véhicule automobile, n'est nullement limitée à ce mode de réalisation, et englobe toute une palette de variantes, en ce qui concerne notamment les configurations des éléments du vitrage et les systèmes de montage du vitrage.

## Revendications

1. Vitrage (1) comprenant un élément vitré choisi parmi un élément verrier (2) constitué d'une ou de plusieurs feuilles de verres liées entre elles le cas échéant par des feuilles intercalaires adhésives ou un élément transparent ou translucide en polycarbonate, avec une pièce (3) en matière plastique surmoulée sur l'élément vitré et au moins un élément rigide (5,8), dans lequel le (ou les) élément(s) rigide(s) (5,8) est (ou sont) incorporé(s) dans la pièce (3) en matière plastique surmoulée, **caractérisé en ce que** le (ou les) élément(s) rigide(s) (5,8) présente(nt) un coefficient de dilatation thermique linéaire différant d'au plus 10⁻⁶ °C⁻¹ de celui de l'élément vitré **et en ce que** le (ou les) élément(s) rigide(s) (5,8) est (ou sont) à base de verre.

2. Vitrage selon la revendication 1, **caractérisé en ce que** le ou les éléments rigides (5,8) présentent un coefficient de dilatation thermique linéaire de l'ordre de 8 à 10 x 10⁻⁶°C⁻¹.

3. Vitrage selon la revendication 1 ou 2, **caractérisé en ce que** ledit élément rigide comprend au moins 60% en volume de verre.

4. Vitrage selon l'une des revendications précédentes, **caractérisé en ce que** ledit élément rigide comprend au plus 90% en volume de verre.

5. Vitrage selon l'une quelconque des revendications précédentes, **caractérisé en ce que** ledit élément rigide (5,8) est un composite de matière plastique (7) et de fibre de verre (6,9).

6. Vitrage selon la revendication 5, **caractérisé en ce que** ledit élément rigide composite est réalisé à partir d'un produit (6,9) constitué de fils comêlés de verre et de matière organique thermoplastique.

7. Vitrage selon la revendication 6, **caractérisé en ce que** ledit élément rigide composite est réalisé à partir de fils comêlés libres ou de semi-produits sous forme de bandes ou de mats (6,9) constitués de fils comêlés tissés ou non.

8. vitrage selon la revendication 7, **caractérisé en ce que** ledit élément rigide composite est réalisé à partir de fils comêlés libres ou de semi-produits associés à une matière organique (7) thermoplastique ou thermodurcissable.

9. Vitrage selon l'une quelconque des revendications 5 à 8, **caractérisé en ce que** ledit élément rigide composite comprend une matière plastique (7) choisie parmi les polyoléfines et les polyesters.

10. Vitrage selon l'une quelconque des revendications précédentes,
**caractérisé en ce que** ledit élément rigide (8) est un support de fixation d'éléments divers, au moyen notamment d'un trou (10) non taraudé ménagé dans l'élément rigide.

11. Vitrage selon l'une quelconque des revendications précédentes, **caractérisé en ce que** ledit élément rigide (5) est un élément de renforcement.

12. Vitrage selon l'une quelconque des revendications précédentes, **caractérisé en ce qu'**il incorpore un dispositif électrochimique électrocommandable à propriétés optiques et/ou énergétiques variables.

13. Utilisation d'un vitrage selon la revendication 12 pour faire partie de vitrages électrochromes.

## Claims

1. Glazing (1) comprising a glazed element chosen from a glass element (2) consisting of one or more sheets of glass bonded together, as appropriate, by adhesive interlayers and from a transparent or translucent element made of polycarbonate, with a rigid element (3) overmolded on the glazed element and at least one rigid element (5, 8), in which a or the rigid element(s) (5, 8) is (or are) incorporated into the overmolded plastic part (3), **characterized in that** the rigid element(s) (5, 8) has (or have) a linear thermal expansion coefficient differing by 10⁻⁶°C⁻¹ at most from that of the glazed element and **in that** the rigid element(s) (5, 8) is (or are) based on glass.

2. The glazing as claimed in claim 1, **characterized in that** the rigid elements (5, 8) have a linear thermal expansion coefficient of the order of 8 to 10 × 10⁻⁶ °C⁻¹.

3. The glazing as claimed in claim 1 or 2, **characterized in that** said rigid element contains at least 60% by volume of glass.

4. The glazing as claimed in one of the preceding claims, **characterized in that** said rigid element contains at most 90% by volume of glass.

5. The glazing as claimed in any of preceding claims, **characterized in that** said rigid element (5, 8) is a plastic (7) and glass fiber (6, 9) composite.

6. The glazing as claimed in claim 5, **characterized in that** said composite rigid element is made from a product (6, 9) consisting of comingled filaments of glass and of organic thermoplastic.

7. The glazing as claimed in claim 6, **characterized in that** said composite rigid element is made from loose comingled filaments or semi-finished products in the form of strips or mats (6, 9) consisting of comingled woven or nonwoven filaments.

8. The glazing as claimed in claim 7, **characterized in that** said composite rigid element is made from loose comingled filaments or semi-finished products associated with an organic thermoplastic or thermoset (7).

9. The glazing as claimed in any of claims 5 to 8, **characterized in that** said composite rigid element contains a plastic (7) chosen from polyolefins and polyesters.

10. The glazing as claimed in any of the preceding claims, **characterized in that** said rigid element (8) is a support for the attachment of various elements, particularly by means of an untapped hole (10) made in the rigid element.

11. The glazing as claimed in any of the preceding claims, **characterized in that** said rigid element (5) is a reinforcing element.

12. The glazing as claimed in any of the preceding claims, **characterized in that** it incorporates an electrically operable electrochemical device, with variable optical and/or energy properties.

13. The use of the glazing as claimed in claim 12 to form part of electrochromic windows, particularly for buildings or for locomotive means of the train, airplane or automobile type.

## Patentansprüche

1. Verglasung (1), die ein Glaselement umfasst, das aus einem Verglasungselement (2) ausgewählt ist, das von einer oder mehreren Glasscheiben, die gegebenenfalls durch haftfähige Zwischenfolien miteinander verbunden sind, oder einem transparenten bzw. durchscheinenden Element aus Polycarbonat gebildet wird, mit einem Teil (3) aus auf das Glaselement aufgeformtem Kunststoff und mindestens einem starren Element (5, 8), wobei das (die) starre(n) Element(e) (5, 8) in das Teil (3) aus aufgeformtem Kunststoff eingebaut ist (sind), **dadurch gekennzeichnet, dass** das (die) starre(n) Element(e) (5, 8) einen Wärmeausdehnungskoeffizienten aufweist (aufweisen), der sich um höchstens 10⁻⁶ °C⁻¹ von demjenigen des Glaselements unterscheidet, und **dass** das (die) starre(n) Element(e) (5, 8) auf der Basis von Glas ist (sind).

2. Verglasung nach Anspruch 1, **dadurch gekennzeichnet, dass** das (die) starre(n) Element(e) (5, 8) einen Wärmeausdehnungskoeffizienten von etwa 8 bis 10·10⁻⁶ °C⁻¹ aufweist (aufweisen).

3. Verglasung nach Anspruch 1 oder 2, **dadurch gekennzeichnet, dass** das starre Element mindestens 60 Vol.-% Glas enthält.

4. Verglasung nach einem der vorhergehenden Ansprüche, **dadurch gekennzeichnet, dass** das starre Element höchstens 90 Vol.-% Glas enthält.

5. Verglasung nach einem der vorhergehenden Ansprüche, **dadurch gekennzeichnet, dass** das starre Element (5, 8) ein Verbundmaterial aus Kunststoff (7) und Glasfasern (6, 9) ist.

6. Verglasung nach Anspruch 5, **dadurch gekennzeichnet, dass** das starre Verbundelement aus einem Produkt (6, 9) hergestellt worden ist, das von Hybridgarnen aus Fasern aus Glas und aus thermoplastischem organischem Material gebildet ist.

7. Verglasung nach Anspruch 6, **dadurch gekennzeichnet, dass** das starre Verbundelement aus freien Hybridgarnen oder Halbfertigprodukten in Form von Bändern oder Matten (6, 9), die von gegebenenfalls verwebten Hybridgarnen gebildet sind, hergestellt worden ist.

8. Verglasung nach Anspruch 7, **dadurch gekennzeichnet, dass** das starre Verbundelement aus freien Hybridgarnen oder Halbfertigprodukten, die mit einem thermoplastischen oder wärmeaushärtbaren organischen Material (7) verbunden sind, hergestellt worden ist.

9. Verglasung nach einem der Ansprüche 5 bis 8, **dadurch gekennzeichnet, dass** das starre Verbundelement einen Kunststoff (7) umfasst, der aus Polyolefinen und Polestern ausgewählt ist.

10. Verglasung nach einem der vorhergehenden Ansprüche, **dadurch gekennzeichnet, dass** das starre Element (8) ein Träger zu Befestigung verschiedener Elemente, insbesondere mittels eines nicht mit Innengewinde versehenen Lochs (10), das in dem starren Element angebracht ist, ist.

11. Verglasung nach einem der vorhergehenden Ansprüche, **dadurch gekennzeichnet, dass** das starre Element (5) ein Verstärkungselement ist.

12. Verglasung nach einem der vorhergehenden Ansprüche, **dadurch gekennzeichnet, dass** sie eine elektrisch steuerbare elektrochemische Vorrichtung mit veränderlichen optischen und/oder energetischen Eigenschaften enthält.

13. Verwendung einer Verglasung nach Anspruch 12 als Bestandteil elektrochromer Verglasungen.
